# EUROPEAN PATENT APPLICATION

(11) **EP 4 528 540 A1**
(43) Date of publication of application: **26.03.2025**
(21) Application number: 23887907.6
(22) Date of filing: 02.11.2023
(51) Int. Cl.: G06F 16/483

(54) **MULTIMEDIA CONTENT DISPLAY METHOD, APPARATUS AND DEVICE, AND STORAGE MEDIUM**

(30) Priority: 07.11.2022 CN 202211387342
(71) Applicant: Beijing Zitiao Network Technology Co., Ltd., Beijing 100190 (CN)
(72) Inventor: ZHAO, Jiarui, Beijing 100028 (CN); YAO, Kangrui, Beijing 100028 (CN); SONG, Wen, Beijing 100028 (CN); ZHANG, Tian, Beijing 100028 (CN)
(74) Representative: Williams, Michael David
(86) International application number: PCT/CN2023/129297
(87) International publication number: WO 2024/099217

(57) **Abstract**

The present disclosure provides a multimedia content display method, apparatus and device, and a storage medium. The method includes: displaying at least one content tag in a preset display area on a target multimedia content page in response to a preset trigger operation on the target multimedia content page; and hiding the preset display area on the target multimedia content page in response to an operation of selecting a target content tag from the at least one content tag, and updating multimedia content displayed on the target multimedia content page based on the target content tag.

## Description

### CROSS REFERENCE TO RELATED APPLICATIONS

The present application is based on and claims priority from Chinese Application No. 202211387342.4, filed on November 7, 2022, the disclosure of which is incorporated herein by reference in its entirety.

### TECHNICAL FIELD

The present disclosure relates to a multimedia content display method, apparatus and device, and a storage medium.

### BACKGROUND

With the continuous development of multimedia technologies, requirements of people for functions related to multimedia content display are becoming increasingly diversified. Therefore, how to enrich the functions related to multimedia content display to meet more requirements of a user and thus improve user experience is an urgent technical problem to be solved at present.

### SUMMARY

According to an aspect of the present disclosure, the present disclosure provides a multimedia content display method. The method includes:
displaying at least one content tag in a preset display area on a target multimedia content page in response to a preset trigger operation on the target multimedia content page; and
hiding the preset display area on the target multimedia content page in response to an operation of selecting a target content tag from the at least one content tag, and updating multimedia content displayed on the target multimedia content page based on the target content tag.

In an optional implementation, the displaying at least one content tag in a preset display area on a target multimedia content page includes:
displaying each content tag in a scrolling manner in the preset display area on the target multimedia content page in a preset display order of the content tag if it is determined that a number of the tags is greater than a preset threshold.

In an optional implementation, before the hiding the preset display area on the target multimedia content page in response to an operation of selecting a target content tag from the at least one content tag, the method further includes:
adjusting a position of scrolling displaying each content tag in the preset display area based on a swiping direction of the preset swiping operation performed in the preset display area in response to a preset swiping operation .

In an optional implementation, the displaying at least one content tag in a preset display area on a target multimedia content page in response to a preset trigger operation on the target multimedia content page includes:
pulling out the preset display area from a top position on the target multimedia content page in response to a drop-down operation performed on the target multimedia content page, and displaying the at least one content tag in the preset display area;

Correspondingly, the hiding the preset display area on the target multimedia content page in response to an operation of selecting a target content tag from the at least one content tag includes:
retracting the preset display area upward on the target multimedia content page in response to the operation of selecting a target content tag from the at least one content tag.

In an optional implementation, the displaying at least one content tag in a preset display area on a target multimedia content page in response to a preset trigger operation on the target multimedia content page includes:
displaying the at least one content tag in the preset display area on the target multimedia content page in response to a trigger operation on a display entry of the target multimedia content page.

In an optional implementation, the content tag includes a content icon and/or content description information.

In an optional implementation, the multimedia content on the target multimedia content page belongs to at least one content type of a video, audio, an image, and text.

According to another aspect of the present disclosure, the present disclosure provides a multimedia content display apparatus. The apparatus includes:
a first display module, configured to display at least one content tag in a preset display area on a target multimedia content page in response to a preset trigger operation on the target multimedia content page; and
an update module, configured to hide the preset display area on the target multimedia content page in response to an operation of selecting a target content tag from the at least one content tag, and update multimedia content displayed on the target multimedia content page based on the target content tag.

According to another aspect of the present disclosure, the present disclosure provides a computer-readable storage medium. The computer-readable storage medium stores instructions therein, and the instructions, when run on a terminal device, cause the terminal device to implement the method described above.

According to another aspect of the present disclosure, the present disclosure provides a multimedia content display device, including: a memory, a processor, and a computer program stored on the memory and runnable on the processor. The processor implements the method described above when executing the computer program.

According to another aspect of the present disclosure, the present disclosure provides a computer program product. The computer program product includes a computer program/instructions. The computer program/instructions implement the method described above when executed by a processor.

### BRIEF DESCRIPTION OF THE DRAWINGS

The accompanying drawings herein are incorporated into and constitute a part of the description, illustrate embodiments consistent with the present disclosure, and are used together with the description to explain the principles of the present disclosure.

In order to more clearly illustrate technical solutions in the embodiments of the present disclosure or in the related technology, the accompanying drawings required in the description of the embodiments or the related technology are described below briefly. Obviously, those of ordinary skill in the art may further derive other accompanying drawings based on these accompanying drawings without creative efforts.
FIG. 1 is a flowchart of a multimedia content display method according to an embodiment of the present disclosure;
FIG. 2 is a schematic diagram of a target multimedia content page according to an embodiment of the present disclosure;
FIG. 3 is a schematic diagram of another target multimedia content page according to an embodiment of the present disclosure;
FIG. 4 is a schematic diagram of still another target multimedia content page according to an embodiment of the present disclosure;
FIG. 5 is a schematic diagram of an effect of displaying each content tag in a leftward scrolling manner according to an embodiment of the present disclosure;
FIG. 6 is a schematic diagram of a scrolling display effect of content tags according to an embodiment of the present disclosure;
FIG. 7 is a schematic diagram of a structure of a multimedia content display apparatus according to an embodiment of the present disclosure; and
FIG. 8 is a schematic diagram of a structure of a multimedia content display device according to an embodiment of the present disclosure.

### DETAILED DESCRIPTION

For a clearer understanding of the above objectives, features, and advantages of the present disclosure, the solutions of the present disclosure will be further described below. It should be noted that the embodiments of the present disclosure and features in the embodiments may be combined with each other without conflict.

Many specific details are set forth in the following description to facilitate a full understanding of the present disclosure. However, the present disclosure may also be implemented in other ways different from those described herein. Apparently, the embodiments in the description are only some rather than all of the embodiments of the present disclosure.

With the continuous development of a multimedia technology, people's requirements for multimedia content display related functions are becoming increasingly diverse. Therefore, how to enrich multimedia content display related functions to meet more requirements of users and thus improve user experience is an urgent technical problem to be solved at present.

Therefore, an embodiment of the present disclosure provides a multimedia content display method. At least one content tag is displayed in a preset display area on a target multimedia content page in response to a preset trigger operation on the target multimedia content page; and the preset display area is hidden on the target multimedia content page in response to an operation of selecting a target content tag from the at least one content tag, and a multimedia content displayed on the target multimedia content page is updated based on the target content tag. It can be seen that according to the embodiment of the present disclosure, a function of displaying the content tag in the preset display area on the target multimedia content page, and updating and displaying the multimedia content on the target multimedia content page in real time based on the selected target content tag can be achieved, thereby enriching multimedia content display functions and improving user experience.

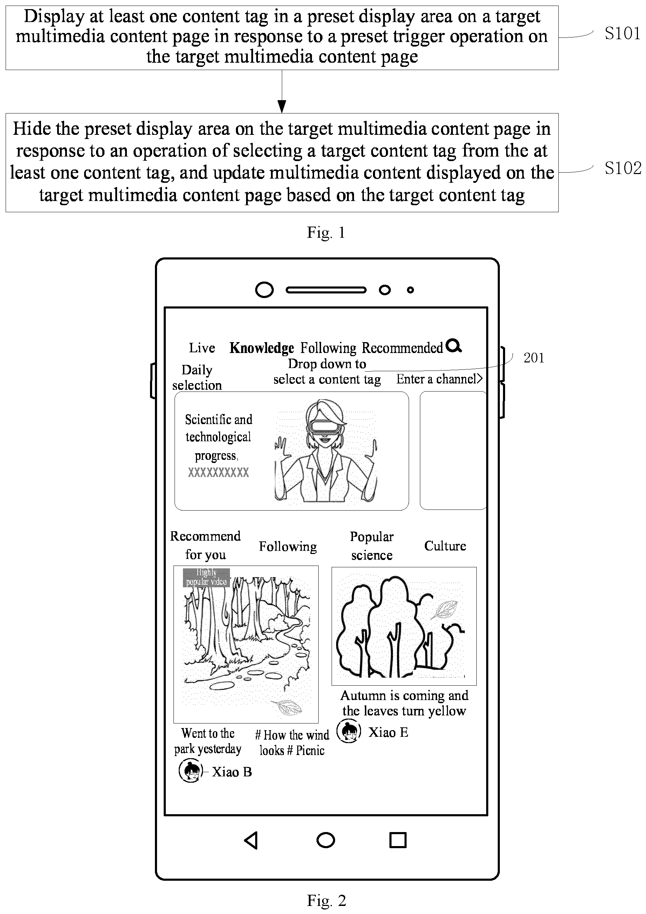

Based on this, an embodiment of the present disclosure provides a multimedia content display method. FIG. 1 is a flowchart of a multimedia content display method according to an embodiment of the present disclosure. The method includes:
S101: displaying at least one content tag in a preset display area on a target multimedia content page in response to a preset trigger operation on the target multimedia content page.

A video processing method according to this embodiment of the present disclosure may be applied to a client. For example, the client may include a client deployed on a smart phone, a client deployed on a tablet computer, or the like.

In the embodiment of the present disclosure, the target multimedia content page may be a display page of any type of multimedia content. The multimedia content may include content types such as a video, audio, an image, and text. The target multimedia content page may be a page for displaying multimedia content related to popular science knowledge, or a page for displaying multimedia content related to learning courses.

In this embodiment of the present disclosure, at least one content tag is displayed in the preset display area on the target multimedia content page when the preset trigger operation on the target multimedia content page is received. The preset trigger operation on the target multimedia content page may include a drop-down operation, a swipe-up operation, or the like performed on the target multimedia content page.

In an optional implementation, when a drop-down operation performed on the target multimedia content page is received, a preset display area may be pulled out from a top position on the target multimedia content page, and at least one content tag may be displayed in the preset display area, to achieve a display effect of pulling out the preset display area from the top position through the drop-down operation.

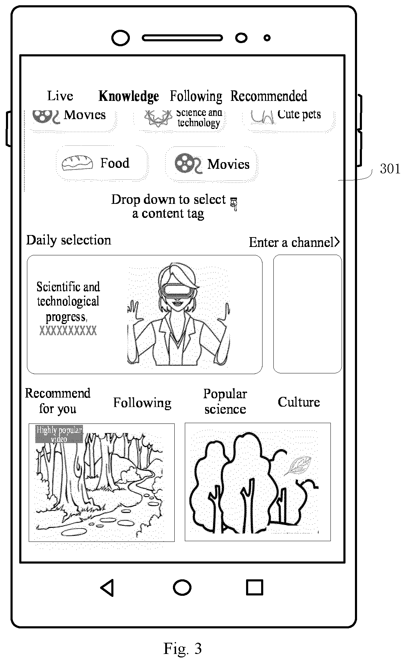

FIG. 2 is a schematic diagram of a target multimedia content page according to an embodiment of the present disclosure. As shown in FIG. 2, when a drop-down operation performed on the target multimedia content page is received, a preset display area is pulled out smoothly from a top position on the target multimedia content page, and at least one content tag is displayed in the preset display area. FIG. 3 is a schematic diagram of another target multimedia content page according to an embodiment of the present disclosure. As shown in FIG. 3, a preset display area 301 is displayed on the target multimedia content page. The target multimedia content page shown in FIG. 3 is in an intermediate state where the preset display area is being pulled out smoothly.

In practical application, as shown in FIG. 2, prompt text 201 indicating "Drop-down to select a content tag" may be further displayed on the target multimedia content page, so as to prompt a user to trigger the display of the content tag through the drop-down operation performed on the target multimedia content page, and have a certain expectation of pulling out the preset display area, thus improving user experience.

In this embodiment of the present disclosure, at least one content tag is displayed in the preset display area on the target multimedia content page. The content tag is determined based on classification of multimedia content and is used to identify a type of the multimedia content. The content tag may include at least one of a content icon or content description information. Specifically, the content description information may include content type names such as cute pets, movies, food, and science and technology. Each piece of content description information corresponds to one content icon. For example, the content icon corresponding to cute pets may be a "kitten" icon, and the content icon corresponding to food may be a "bread" icon.

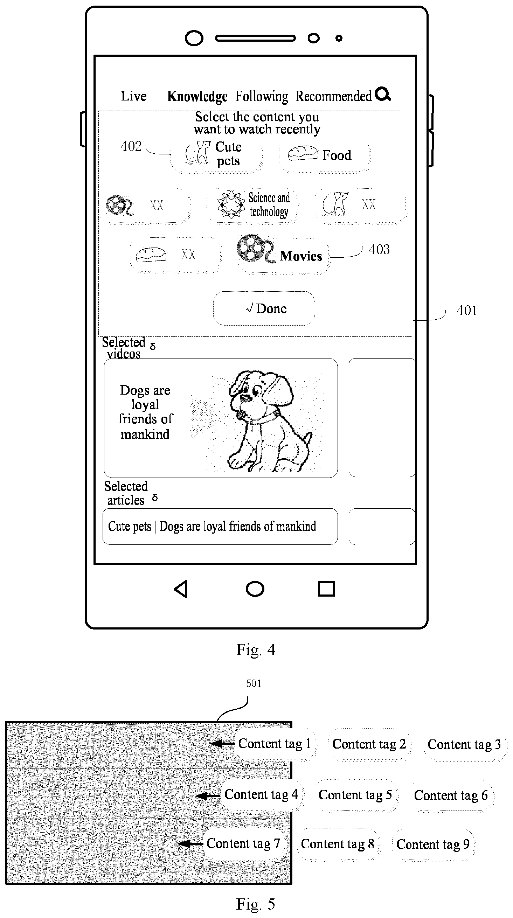

FIG. 4 is a schematic diagram of still another target multimedia content page according to an embodiment of the present disclosure. As shown in FIG. 4, a preset display area 401 is displayed at a top position on the target multimedia content page, and a plurality of content tags, such as cute pets, movies, food, and science and technology, are displayed in the preset display area 401. The target multimedia content page shown in FIG. 4 is in a final display state where the preset display area is pulled out smoothly. By transition from the intermediate state where the preset display area is being pulled out smoothly triggered by the drop-down operation to the final display state where the preset display area is pulled out, the effect of dynamic gradual emergence of the preset display area can be achieved.

In another optional implementation, the preset trigger operation on the target multimedia content page may further include a trigger operation on a display entry of the target multimedia content page. Specifically, the preset display area can be pulled out from a preset position on the target multimedia content page when the trigger operation on the display entry of the target multimedia content page is received. The trigger operation on the display entry of the target multimedia content page may include a tap operation on the display entry of the target multimedia content page, or the like.

Referring to FIG. 1 again, the multimedia content display method according to this embodiment of the present disclosure further includes:
S102: hide the preset display area on the target multimedia content page in response to an operation of selecting a target content tag from the at least one content tag, and update multimedia content displayed on the target multimedia content page based on the target content tag.

In this embodiment of the present disclosure, the target content tag may be one or more content tags displayed in the preset display area. The operation of selecting a target content tag from the at least one content tag may include an operation of selecting a content icon of the target content tag, an operation of selecting content description information of the target content tag, or the like, and is used to achieve an effect of hiding the preset display area on the target multimedia content page.

In practical application, when a tap operation on any content tag is received, a content icon of the content tag may be zoomed in, so that the user can visually see the content tag selected by the user.

In an optional implementation, when a tap operation on any content tag is received, content description information of the content tag may be bolded, so that the user can more visually see the content tag selected by the user. As shown in FIG. 4, a target content tag 403 represents a display state of a content tag obtained after zooming in and bolding.

In this embodiment of the present disclosure, the multimedia content on the target multimedia content page may belong to at least one content type of a video, audio, an image, or text. As shown in FIG. 2, the multimedia content on the target multimedia content page may include an article related to science and technology, or may be of a content type such as a recommended video that has been played a lot recently.

In practical application, to enrich displayed content on the target multimedia content page, the multimedia content displayed on the target multimedia content page may further include a video creation template, a recommended prop, a recommended special effect, and other types of multimedia content. Subsequently, the user can select corresponding multimedia content as required for video creation and the like.

In an optional implementation, to enable the user to have a certain expectation about a position of displaying and a position of hiding the preset display area, it is assumed that an effect of pulling out the preset display area from the top position on the target multimedia content page can be achieved by a drop-down operation performed on the target multimedia content page. Correspondingly, when the operation of selecting a target content tag from the at least one content tag is received, the preset display area may be retracted upward on the target multimedia content page.

In this embodiment of the present disclosure, when the operation of selecting a target content tag from the at least one content tag is received, the displayed multimedia content is updated on the target multimedia content page based on the target content tag. Specifically, corresponding multimedia content is determined based on the target content tag, and the original multimedia content displayed on the target multimedia content page is updated based on the determined multimedia content, so that the user can conveniently watch or use the multimedia content that the user is interested in, thereby further improving user experience.

As shown in FIG, 4, a content tag 402 is displayed in the preset display area 401 on the target multimedia content page. Content description information of the content tag 402 is "Cute pets". When an operation of determining the content tag 402 as the target content tag is received, the preset display area 401 is retracted upward on the target multimedia content page, and the multimedia content displayed on the target multimedia content page is updated to a video, an image, an article, and the like related to "Cute pets" based on the content description information "Cute pets" of the content tag 402.

In an optional implementation, prompt text indicating "Select the content you want to view recently" may be further displayed in the preset display area on the target multimedia content page, to prompt the current user to select the target content tag, so as to subsequently update the multimedia content on the target multimedia content page based on the target content tag.

In an optional implementation, if the user wants to cancel the selected target content tag, an effect of canceling the selection of the target content tag can be achieved by an operation of tapping the target content tag again performed on the target content tag.

In the multimedia content display method according to this embodiment of the present disclosure, first, the at least one content tag is displayed in the preset display area on the target multimedia content page in response to the preset trigger operation on the target multimedia content page; and then, the preset display area is hidden on the target multimedia content page in response to the operation of selecting a target content tag from the at least one content tag, and the multimedia content displayed on the target multimedia content page is updated based on the target content tag. It can be learned that according to this embodiment of the present disclosure, a function of displaying the content tag in the preset display area on the target multimedia content page, and updating the multimedia content displayed on the target multimedia content page in real time based on the selected target content tag can be achieved, thereby enriching multimedia content display functions and improving user experience.

In practical application, to further enrich the display functions based on the multimedia content, when at least one content tag is displayed in the preset display area, each content tag may alternatively be displayed in a scrolling manner in the preset display area in a display order of the content tags.

In this embodiment of the present disclosure, due to limited positions for display in the preset display area, if it is determined that a number of the tags is greater than a preset threshold, each content tag may be displayed in a scrolling manner in the preset display area on the target multimedia content page in a preset display order of the content tags, thereby further enriching the display functions based on the multimedia content and improving user experience. Optionally, if it is determined that the number of tags is not greater than the preset threshold, each content tag may be statically displayed in the preset display area in the preset display order of the content tags.

In this embodiments of the present disclosure, the preset threshold may be a preset value. For example, the preset threshold may be a numerical value determined based on a size of the preset display area and a size of the content tag.

In an optional implementation, if it is determined that the number of the tags is greater than the preset threshold, each content tag may be displayed in a leftward scrolling manner in the preset display area in the preset display order of the content tags. FIG. 5 is a schematic diagram of an effect of displaying each content tag in a leftward scrolling manner according to an embodiment of the present disclosure.

A preset display order of the content tags may be a predetermined arrangement order based on actual needs. As shown in FIG. 5, content tags 1 to 9 may be arranged in a display order of three rows and three columns in advance, and then sequentially displayed in a leftward scrolling manner in a preset display area 501 on a target multimedia content page in the display order of three rows and three columns. In addition, each content tag may be cyclically displayed in a scrolling manner in the preset display area in the preset display order of the content tags, until the target content tag is determined.

In practical application, each content tag may be displayed in a leftward scrolling manner in the preset display area on the target multimedia content page, or in a rightward scrolling manner, an upward scrolling manner or a downward scrolling manner in the preset display area on the target multimedia content page. A specific display effect can be understood with reference to FIG. 5, and details are not described herein.

In practical application, a position of scrolling displaying each content tag in scrolling display can be adjusted by a preset swiping operation performed in the preset display area. For example, in the process of displaying each content tag in a leftward scrolling manner in the preset display area in the preset display order of content tags, if the user wants to adjust an overall position of displaying each content tag, the adjustment can be implemented by a preset swiping operation performed in the preset display area. Specifically, the position of scrolling displaying each content tag in the preset display area is adjusted based on a swiping direction of the preset swiping operation.

In the embodiment of the present disclosure, the preset swiping operation performed in the preset display area may include a leftward swiping operation, a rightward swiping operation, an upward swiping operation, a downward swiping operation, or the like performed at any position in the preset display area.

In an optional implementation, assuming that each content tag is displayed in a leftward scrolling manner in a preset display area, a preset swiping operation performed in the preset display area may be a leftward swiping operation or a rightward swiping operation. When the preset swiping operation performed in the above preset display area is received, a position of scrolling displaying each content tag in the preset display area is adjusted leftward or rightward based on a swiping direction of the preset swiping operation.

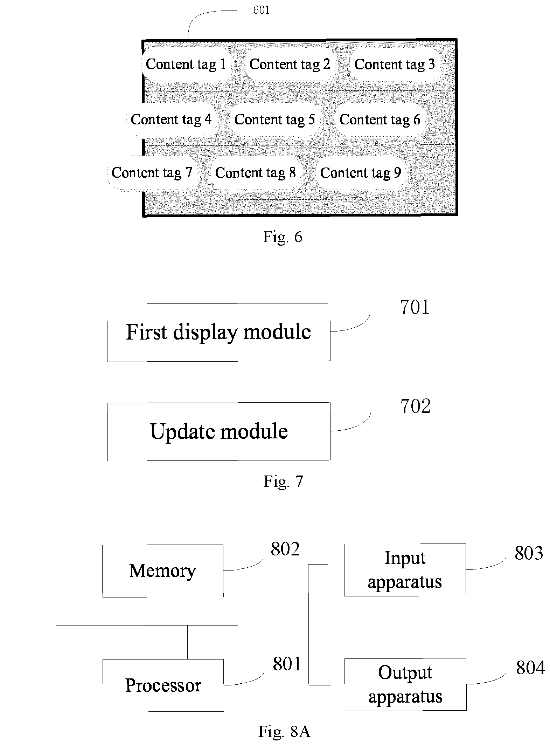

As shown in FIG. 5, in the process of displaying each content tag in a leftward scrolling manner in the preset display area in the preset display order of content tags, the user can adjust a position of scrolling displaying each content tag leftward by a leftward swiping operation performed in the preset display area, so as to control an overall scrolling speed of each content tag. FIG. 6 is a schematic diagram showing an effect of displaying a content tag in a scrolling manner according to an embodiment of the present disclosure. As shown in FIG. 6, it is obvious that the position of scrolling displaying each content tag in FIG. 5 can be quickly adjusted by a leftward swiping operation performed in a preset display area 601, which facilitates an operation of selecting a content tag by the user, thus further improving the user experience.

In an optional implementation, assuming that each content tag is displayed in an upward or downward scrolling manner in a preset display area, a preset swiping operation performed in the preset display area may be an upward swiping operation or a downward swiping operation. When the preset swiping operation performed in the above preset display area is received, a position of scrolling displaying each content tag in the preset display area is adjusted upward or downward based on a swiping direction of the preset swiping operation. A specific display effect can be understood with reference to FIGS. 5 and 6, and details are not described herein.

In the embodiment of the present disclosure, each content tag is displayed in a scrolling manner in the preset display area in the preset display order of content tags, and a position of scrolling displaying each content tag can be quickly adjusted by a preset swiping operation performed in the preset display area, thereby further enriching the display functions based on the multimedia content and improving user experience.

Based on the above method embodiment, the present disclosure further provides a multimedia content display apparatus. FIG. 7 is a schematic diagram of a structure of a multimedia content display apparatus according to an embodiment of the present disclosure. Referring to FIG. 7, the apparatus includes:
a first display module 701, configured to display at least one content tag in a preset display area on a target multimedia content page in response to a preset trigger operation on the target multimedia content page; and
an update module 702, configured to hide the preset display area on the target multimedia content page in response to an operation of selecting a target content tag from the at least one content tag, and update multimedia content displayed on the target multimedia content page based on the target content tag.

In an optional implementation, the first display module includes:
a scrolling display submodule, configured to display each content tag in a scrolling manner in the preset display area on the target multimedia content page in a preset display order of the content tags if it is determined that a number of the tags is greater than a preset threshold.

In an optional implementation, the apparatus further includes:
an adjustment module, configured to adjust a position of scrolling displaying each content tag in the preset display area based on a swiping direction of the preset swiping operation performed in the preset display area in response to a preset swiping operation .

In an optional implementation, the first display module includes:
a first display submodule, configured to pull out a preset display area from a top position on the target multimedia content page in response to a drop-down operation performed on the target multimedia content page, and display the at least one content tag in the preset display area; and
correspondingly, the update module is specifically configured to:
   retract the preset display area upward on the target multimedia content page in response to the operation of selecting a target content tag from the at least one content tag.

In an optional implementation, the first display module includes:
a second display module, configured to display the at least one content tag in the preset display area on the target multimedia content page in response to a trigger operation on a display entry of the target multimedia content page.

In an optional implementation, the content tag includes a content icon and/or content description information.

In an optional implementation, the multimedia content on the target multimedia content page belongs to at least one content type of a video, audio, an image, or text.

In the multimedia content display apparatus according to the embodiment of the present disclosure, at least one content tag is displayed in a preset display area on a target multimedia content page in response to a preset trigger operation on the target multimedia content page; and the preset display area is hidden on the target multimedia content page in response to an operation of selecting a target content tag from the at least one content tag, and a multimedia content displayed on the target multimedia content page is updated based on the target content tag. It can be seen that according to the embodiment of the present disclosure, a function of displaying the content tag in the preset display area on the target multimedia content page, and updating and displaying the multimedia content on the target multimedia content page in real time based on the selected target content tag can be achieved, thereby enriching multimedia content display functions and improving user experience.

In addition to the method and apparatus described above, an embodiment of the present disclosure further provides a computer-readable storage medium. The computer-readable storage medium stores instructions therein. The instructions, when run on a terminal device, cause the terminal device to implement the multimedia content display method according to the embodiment of the present disclosure.

An embodiment of the present disclosure further provides a computer program product or a computer program. The computer program product or the computer program includes a computer program/instructions. When the computer program/instructions are executed by a processor, the multimedia content display method according to the embodiment of the present disclosure is implemented.

In addition, an embodiment of the present disclosure further provides a multimedia content display device. FIG. 8 is a schematic diagram of a structure of a multimedia content display device according to an embodiment of the present disclosure. As shown in FIG. 8, the multimedia content display device may include:
a processor 801, a memory 802, an input apparatus 803, and an output apparatus 804. There may be one or more processors 801 in the multimedia content display device. For example, there is one processor in FIG. 8. In some embodiments of the present disclosure, the processor 801, the memory 802, the input apparatus 803, and the output apparatus 804 may be connected by a bus or in another manner. For example, they are connected by a bus in FIG. 8.

The memory 802 may be configured to store software programs and modules, and the processor 801 executes various functional applications and data processing of the multimedia content display device by running the software programs and the modules stored in the memory 802. The memory 802 may mainly include a program storage area and a data storage area. The program storage area may store an operating system, an application required for at least one function, and the like. In addition, the memory 802 may include a highspeed random access memory, and may further include a non-volatile memory, such as at least one magnetic disk storage device, a flash memory device, or other volatile solid-state storage devices. The input apparatus 803 may be configured to receive entered numerical or character information, and generate a signal input related to a user setting and function control of the multimedia content display device.

Specifically, in this embodiment, the processor 801 loads an executable file corresponding to a process of one or more applications into the memory 802 in accordance with the following instructions, and the processor 801 runs the application stored in the memory 802, to implement various functions of the above multimedia content display device.

It should be noted that the relational terms such as "first" and "second" herein are only used to distinguish one entity or operation from another, and do not necessarily require or imply that any actual relationship or sequence exists between these entities or operations. Moreover, the terms "include" and "comprise", or any of their variants are intended to cover a non-exclusive inclusion, so that a process, method, article, or device that includes a series of elements not only includes those elements but also includes other elements that are not expressly listed, or further includes elements inherent to such process, method, article, or device. In the absence of more restrictions, an element defined by "including a ..." does not exclude another identical element in a process, method, article, or device that includes the element.

The above description illustrates merely specific implementations of the present disclosure, so that a person skilled in the art can understand or implement the present disclosure. Various modifications to these embodiments are apparent to a person skilled in the art, and the general principle defined herein may be practiced in other embodiments without departing from the spirit or scope of the present disclosure. Therefore, the present disclosure is not limited to the embodiments described herein but should comply with the broadest scope consistent with the principle and novel features disclosed herein.

## Claims

1. A multimedia content display method, comprising:
displaying at least one content tag in a preset display area on a target multimedia content page in response to a preset trigger operation on the target multimedia content page; and
hiding the preset display area on the target multimedia content page in response to an operation of selecting a target content tag from the at least one content tag, and updating multimedia content displayed on the target multimedia content page based on the target content tag.

2. The method according to claim **1,** wherein the displaying at least one content tag in a preset display area on a target multimedia content page comprises:
displaying each content tag in a scrolling manner in the preset display area on the target multimedia content page in a preset display order of the content tag if it is determined that a number of the tags is greater than a preset threshold.

3. The method according to claim 2, wherein before the hiding the preset display area on the target multimedia content page in response to an operation of selecting a target content tag from the at least one content tag, the method further comprises:
adjusting a position of scrolling displaying each content tag in the preset display area based on a swiping direction of a preset swiping operation performed in the preset display area in response to the preset swiping operation.

4. The method according to any one of claims 1 to 3, wherein the displaying at least one content tag in a preset display area on a target multimedia content page in response to a preset trigger operation on the target multimedia content page comprises:
pulling out the preset display area from a top position on the target multimedia content page in response to a drop-down operation performed on the target multimedia content page, and displaying the at least one content tag in the preset display area; and
the hiding the preset display area on the target multimedia content page in response to an operation of selecting a target content tag from the at least one content tag comprises:
retracting the preset display area upward on the target multimedia content page in response to the operation of selecting a target content tag from the at least one content tag.

5. The method according to any one of claims 1 to 4, wherein the displaying at least one content tag in a preset display area on a target multimedia content page in response to a preset trigger operation on the target multimedia content page comprises:
displaying the at least one content tag in the preset display area on the target multimedia content page in response to a trigger operation on a display entry of the target multimedia content page.

6. The method according to any one of claims 1 to 5, wherein the content tag comprises a content icon and/or content description information.

7. The method according to any one of claims 1 to 6, wherein the multimedia content on the target multimedia content page belongs to at least one content type of a video, audio, an image, or text.

8. A multimedia content display apparatus, wherein the apparatus comprises:
a first display module, configured to display at least one content tag in a preset display area on a target multimedia content page in response to a preset trigger operation on the target multimedia content page; and
an update module, configured to hide the preset display area on the target multimedia content page in response to an operation of selecting a target content tag from the at least one content tag, and update multimedia content displayed on the target multimedia content page based on the target content tag.

9. A computer-readable storage medium, wherein the computer-readable storage medium stores instructions, and the instructions, when run on a terminal device, cause the terminal device to implement the method according to any one of claims 1 to 7.

10. A multimedia content display device, comprising: a memory, a processor, and a computer program that is stored on the memory and runnable on the processor, wherein the processor, when executing the computer program, implements the method according to any one of claims 1 to 7.

11. A computer program, comprising
instructions that, when executed by a processor, cause the processor to perform the method according to any one of claims 1 to 7.

12. A computer program product, comprising instructions that, when executed by a processor, cause the processor to perform the method according to any one of claims 1 to 7.
